# EUROPÄISCHE PATENTSCHRIFT

(11) **EP 3 275 710 B1**
(45) Veröffentlichungstag und Bekanntmachung des Hinweises auf die Patenterteilung: **07.07.2021**
(21) Anmeldenummer: 16181669.9
(22) Anmeldetag: 28.07.2016
(51) Int. Cl.: B60J 7/16, B60J 5/06

(54) **GELENK MIT SCHIEBLING**
JOINT WITH SLIDE
ARTICULATION A COULISSEAU

(43) Veröffentlichungstag der Anmeldung: 31.01.2018
(73) Patentinhaber: Schmitz Cargobull AG, 48341 Altenberge (DE)
(72) Erfinder: Schouwink, Christian, 48161 Münster (DE); Hornig, Stefan, 48565 Steinfurt (DE)
(74) Vertreter: Cohausz & Florack

(56) Entgegenhaltungen:
- EP-A1- 1 544 087
- DE-U1- 20 215 675
- US-A- 5 913 561
- None

## Beschreibung

Die Erfindung betrifft eine Runge, insbesondere Eckrunge, für einen Planenaufbau eines Nutzfahrzeugs, insbesondere Lastkraftwagens, Anhängers oder Sattelaufliegers, mit einem wenigstens einseitig höhenverstellbaren Dach, umfassend einen Rungenkopf zum wenigstens teilweise Tragen eines Dachs und eine Rungenkopfaufnahme zur wenigstens teilweisen Aufnahme des Rungenkopfs in einer in die Rungenkopfaufnahme eingeschobenen und in einer aus der Rungenkopfaufnahme ausgezogenen Stellung, wobei der Rungenkopf und die Rungenkopfaufnahme durch ein Schwenkgelenk zum Schwenken des Rungenkopfs gegenüber der Rungenkopfaufnahme verbunden sind. Ferner betrifft die Erfindung einen Planenaufbau eines Nutzfahrzeugs, insbesondere Lastkraftwagens, Anhängers oder Sattelaufliegers, mit wenigstens einer das Dach wenigstens teilweise stützenden Runge, insbesondere Eckrunge.

Nutzfahrzeuge der genannten Art, beispielsweise in Form von Lastkraftwagen, Anhängern und Sattelaufliegern, sind insbesondere für den Transport von Gütern, vorzugsweise Stückgütern, im öffentlichen Straßenverkehr vorgesehen. Zu diesem Zweck weisen die Nutzfahrzeuge unterschiedliche Arten von Aufbauten auf, welche der Aufnahme der zu transportierenden Güter in einem Laderaum dienen. So sind beispielsweise Kofferaufbauten mit festen Seitenwänden und einem festen Dach bekannt, welche den Laderaum umschließen. Da die Kofferaufbauten geschlossen sind, sind Kofferaufbauten in besonderem Maße für den Transport von feuchtigkeitsempfindlichen und/oder temperaturempfindlichen Gütern, also beispielsweise für den sogenannten Trockentransport und/oder den Kühltransport geeignet. Neben Kofferaufbauten sind zudem sogenannte Planenaufbauten bekannt, bei denen die Seitenwände und das Dach durch wenigstens eine Plane verschlossen sind. Die Stirnwand ist bei Planenaufbauten meist als feste Wand ausgebildet, während die Rückwand regelmäßig durch zwei Flügeltüren gebildet wird, um den Laderaum bedarfsweise von hinten zu beladen. Wenn eine Plane entlang der Seitenwand verschoben werden kann, spricht man auch von sogenannten Curtainsidern.

Das Dach von Planenaufbauten weist typischerweise seitlich angeordnete Längsholme auf, die unter Bildung einer Rahmenstruktur quer zum Nutzfahrzeug über Spriegel miteinander verbunden sind. Die Rahmenstruktur trägt dann die Plane im Dachbereich. Die Rahmenstruktur wird ihrerseits von Rungen getragen, die am Rand des Laderaums angeordnet und dort mit dem Rand des Ladebodens verbunden sind. Die Rungen erstrecken sich dann in etwa senkrecht zum Ladeboden nach oben in Richtung des Dachs des Planenaufbaus. Je nachdem wo die Eckrungen vorgesehen sind, handelt es sich um sogenannte Mittelrungen oder Eckrungen. Eckrungen sind an den Ecken des Laderaums bzw. des Nutzfahrzeugs vorgesehen, während Mittelrungen seitlich am Nutzfahrzeug zwischen den Eckrungen vorgesehen sein können. Insbesondere bei Sattelaufliegern sind an jeder Seite regelmäßig 3 bis 4 Mittelrungen zwischen den Eckrungen vorgesehen.

Um das Be- und/oder Entladen von Planenaufbauten zu vereinfachen, können insbesondere die Eckrungen höhenverstellbar ausgebildet sein, um das Dach insgesamt oder an bestimmen Ecken oder einer bestimmten Seite des Nutzfahrzeugs anheben zu können, je nach dem wo das Be- und/oder Entladen erfolgen soll. Das wenigstens bereichsweise Anheben des Dachs erlaubt das Be- und Entladen von Ladung mit einer Höhe, die etwa der maximalen Ladehöhe des Laderaums entspricht, ohne dass dies durch den seitlichen Längsholm des Dachs behindert wird. Zusätzlich oder alternativ können Dächer von Planenaufbauten auch in unterschiedlichen Höhen in verschiedenen Fahrstellungen angeordnet werden. Auf diese Weise kann das Dach jeweils an die maximal zulässige Gesamthöhe des Nutzfahrzeugs und/oder an die Höhe der geladenen Ladung angepasst werden, um so möglichst viel Ladung transportieren und/oder den Luftwiderstand des Nutzfahrzeugs minimieren zu können. Eine Runge der zuvor genannten Art ist beispielsweise aus der EP 1 544 087 A1 bekannt.

Um die Rungen höhenverstellbar auszubilden, ist es bekannt, die Rungen mit einem Rungenkopf zu versehen, der das Dach wenigstens teilweise trägt, insbesondere einen Längsholm des Dachs bereichsweise abstützt. Der Rungenkopf ist dabei wenigstens teilweise in einer Rungenkopfaufnahme aufgenommen, aber zugleich höhenverstellbar gegenüber der Rungenkopfaufnahme vorgesehen. Der Rungenkopf kann daher gegenüber der Rungenkopfaufnahme von einer eingeschobenen unteren Stellung in eine ausgezogene obere Stellung verstellt werden, um das Dach bereichsweise anzuheben. Anschließend kann der Rungenkopf wieder aus der ausgezogenen Stellung in die eingeschobene Stellung zurückverstellt werden. Der Rungenkopf ist zudem über ein Schwenkgelenk mit der Rungenkopfaufnahme verbunden, um das Dach bereichsweise anheben und dementsprechend schräg stellen bzw. neigen zu können.

Bei der Ausgestaltung der Runge ist zu berücksichtigen, dass beim Be- und Entladen geringere Anforderungen als beim Fahren an die mechanischen Eigenschaften wie etwa die Festigkeit und die Steifigkeit, insbesondere Verwindungssteifigkeit, gestellt werden. Zu berücksichtigen ist auch, dass das Dach das einseitige Anheben beschädigungsfrei und einfach ermöglichen sollte, da das Dach in der einseitig angehobenen Stellung gegenüber der Fahrstellung einen nicht unerheblichen Neigungswinkel aufweisen kann. Deshalb werden im Stand der Technik Eckrungen mit einseitigen Gelenken oder mit spielbehafteten Führungen vorgesehen, um für einen Bewegungsausgleich des Dachs zu sorgen. Die Führungen mit einem hinreichend großen Spiel erlauben einerseits mehrere Fahrstellungen des Dachs in unterschiedlichen Höhen und andererseits das einseitige Anheben des Dachs aus den unterschiedlichen Fahrhöhen. Allerdings werden die Rungen mit spielbehafteten Führungen während der Fahrt des Nutzfahrzeugs durch Verwindung des Planenaufbaus und Schwingungen unterschiedlicher Art höheren Belastungen ausgesetzt, was umso mehr der Fall ist, je höher das Dach in der jeweiligen Fahrstellung vorgesehen ist. Diese Nachteile können unter Umständen die Langlebigkeit des Plananaufbaus verringern oder aber stabilere, schwerere und teurere Eckrungen erforderlich machen. Eckrungen mit einseitigen Gelenken sind dagegen lediglich für das einseitige Liften des Dachs zum Be- und/oder Entladen vorgesehen und geeignet. In unterschiedlichen Fahrhöhen können die entsprechenden Planenaufbauen nicht praktikabel betrieben werden.

Daher liegt der vorliegenden Erfindung die Aufgabe zugrunde, die Runge und den Planenaufbau jeweils der eingangs genannten und zuvor näher beschriebenen Art derart auszugestalten und weiterzubilden, dass das Dach des Planenaufbaus ausgehend von unterschiedlichen Fahrstellungen und damit Höhen des Dachs problemlos einseitig geliftet werden kann ohne dass dies die Langlebigkeit und die Ausgestaltung der Runge erheblich beeinträchtigt.

Diese Aufgabe ist bei einer Runge nach dem Oberbegriff von Anspruch 1 dadurch gelöst, dass der Rungenkopf in der ausgezogenen Stellung derart aus der Rungenkopfaufnahme ausgezogen ist, dass das wenigstens teilweise Schwenken des Rungenkopfs um das Schwenkgelenk von einer Ausgangsstellung in eine verschwenkte Stellung freigegeben ist, und dass der Rungenkopf in der eingeschobenen Stellung derart in der Rungenkopfaufnahme aufgenommen ist, dass das Schwenken des Rungenkopfs aus der Ausgangsstellung um das Schwenkgelenk wenigstens im Wesentlichen blockiert ist.

Zudem ist die genannte Aufgabe bei einem Planenaufbau nach dem Oberbegriff von Anspruch 14 dadurch gelöst, dass die wenigstens eine Runge nach einem der Ansprüche 1 bis 13 ausgebildet ist und dass das Dach über die wenigstens eine Runge von wenigstens einer parallel zum Ladeboden angeordneten Fahrstellung in wenigstens eine schräg zum Ladeboden geneigte Ladestellung und zurück verstellbar ist.

Die Erfindung hat erkannt, dass die Anforderungen an einen höhenverstellbaren Planenaufbau durch die Verwendung wenigstens einer Runge erfüllt werden können, deren Schwenkgelenk je nach der Stellung des Rungenkopfes freigegeben oder blockiert ist. In der ausgezogenen Stellung des Rungenkopfs kann der Rungenkopf wenigstens teilweise gegenüber einer Ausgangsstellung zur Seite geschwenkt werden. Dagegen ist dies in der eingeschobenen Stellung des Rungenkopfs nicht oder wenigstens kaum der Fall. Diese unterschiedliche Funktionalität des Schwenkgelenks wird dadurch erreicht, dass der Rungenkopf in der eingeschobenen und in der ausgezogenen Stellung unterschiedlich weit in der Rungenkopfaufnahme aufgenommen ist. Durch das Ausziehen des Rungenkopfs gegenüber der Rungenkopfaufnahme kann die Schwenkbewegung des Rungenkopfs von der Ausgangsstellung zur Seite freigegeben werden. Zudem kann das Schwenken des Rungenkopfs aus der Ausgangsstellung zur Seite in der eingeschobenen Stellung des Rungenkopfs dadurch verhindert sein, dass der Rungenkopf beim Schwenken aus der Ausgangsstellung in Richtung einer seitlichen Stellung in Anlage an einen Anschlag gelangt, der insbesondere von der Rungenkopfaufnahme bereitgestellt werden kann, in die der Rungenkopf eingeschoben ist. Dabei kann der Rungenkopf formschlüssig gegenüber einer Schwenkbewegung zur Seite in der Rungenkopfaufnahme gehalten sein, wobei bedarfsweise ein gewisses Spiel zwischen dem Rungenkopf und der Rungenkopfaufnahme in Bezug auf die Bewegung aus der Ausgangsstellung zur Seite vorgesehen sein kann aber nicht muss. Das Spiel ist zudem vorzugsweise so klein, dass das teilweise Ausziehen des Rungenkopfs aus der Rungenkopfaufnahme aus der eingeschobenen Stellung in die ausgezogene Stellung ungehindert möglich, ein Schwenken des Rungenkopfs zur Seite aber wenigstens im Wesentlichen verhindert ist.

Erfindungsgemäß kann also in der eingeschobenen Stellung des Rungenkopfs in die Rungenkopfaufnahme eine sehr zweckmäßige Fahrstellung des Dachs eingenommen werden. Das wenigstens teilweise Schwenken des Rungenkopfs und die sich daraus ergebenden Bewegungen des Dachs werden auf diese Weise in der eingeschobenen Stellung verhindert. Außerdem kann ein recht enger Formschluss zwischen dem Rungenkopf und der Rungenkopfaufnahme bereitgestellt werden, so dass sich der Rungenkopf beim Fahren nur geringfügig in der Rungenkopfaufnahme hin und her bewegen kann. So werden insgesamt Beschädigungen an der Runge vermieden. Zugleich wird aber auch eine gute Funktionalität des Dachs bereitgestellt. Das Dach kann bereichsweise und bedarfsweise ohne ein Entriegeln des Dachs angehoben, also geliftet, werden, und zwar bereichsweise, einseitig oder insgesamt. Durch das Ausziehen des Rungenkopfs aus der Rungenkopfaufnahme in die ausgezogene Stellung wird das Schwenkgelenk freigegeben. So kann das Dach einerseits problemlos geneigt werden. Andererseits kann aber auch dem Umstand Rechnung getragen werden, dass die Längenerstreckung des Dachs in Querrichtung zum Planenaufbau in der teilweise gelifteten Stellung gegenüber der nicht geneigten Fahrstellung des Dachs kürzer ist. Durch das Schwenken des Rungenkopfs, insbesondere nach innen in Richtung des Laderaums, kann die Neigung des Dachs ermöglicht und/oder die Breitenabnahme des Dachs durch das Neigen desselben ausgeglichen werden.

Bei der entsprechenden Runge handelt es sich insbesondere um eine Eckrunge, weil die Eckrungen typischerweise die Verstellung des Dachs bewirken und das Dach auch beim Be- und/oder Entladen tragen, während die Mittelrungen bedarfsweise entfernt oder zur Seite verstellt werden können, um einen freien Zugang zum Laderaum bereitzustellen.

Der besseren Verständlichkeit halber und zur Vermeidung unnötiger Wiederholungen werden nachfolgend die Runge und der Planenaufbau gemeinsam beschrieben, ohne jeweils im Einzelnen zwischen der Runge und dem Planenaufbau zu unterscheiden. Für den Fachmann ist aber jeweils aus dem Kontext erkennbar, welche Merkmale jeweils in Bezug auf die Runge und in Bezug auf den Plananaufbau bevorzugt sind.

Bei einer ersten besonders bevorzugten Ausgestaltung der Runge ist das Schwenkgelenk höhenverstellbar gegenüber der Rungenkopfaufnahme vorgesehen. Alternativ oder zusätzlich kann das Schwenkgelenk ortsfest gegenüber dem Rungenkopf vorgesehen sein. Auf diese Weise kann das Schwenkgelenk gegenüber der Rungenaufnahme ausgezogen werden, und zwar bevorzugt zusammen mit dem Rungenkopf. Dies ermöglicht eine konstruktiv einfache Lösung, da dann bedarfsweise keine Veränderung des Rungenkopfes beim Ausziehen aus der Rungenkopfaufnahme erfolgen muss, lediglich die Anordnung des Rungenkopfs und des Schwenkgelenks in Bezug auf die Rungenkopfaufnahme verändert sich beim Ausziehen, so dass das Schwenkgelenk durch das Ausziehen einfach zum Schwenken des Rungenkopfs freigegeben werden kann. Grundsätzlich könnte auch das Schwenkgelenk höhenverstellbar gegenüber dem Rungenkopf und/oder ortsfest gegenüber der Rungenkopfaufnahme vorgesehen sein. Auch auf diese Weise könnten die zuvor beschriebenen Vorteile erreicht werden. Aus konstruktiver Sicht und zur einfachen und zuverlässigen Handhabung der Runge erscheint es aber in vielen Fällen bevorzugt zu sein, wenn das Schwenkgelenk höhenverstellbar gegenüber der Rungenkopfaufnahme und ortsfest zum Rungenkopf ausgebildet ist.

Die Verstellbarkeit des Rungenkopfs gegenüber der Rungenkopfaufnahme kann in konstruktiv einfacher Weise bereitgestellt werden, indem der Rungenkopf in wenigstens ein Langloch der Rungenkopfaufnahme eingreift und entlang des wenigstens einen Langlochs gegenüber der Rungenkopfaufnahme höhenverstellbar vorgesehen ist. So kann auch das Schwenkgelenk zusammen mit dem Rungenkopf leicht gegenüber der Rungenkopfaufnahme verstellt werden. Alternativ oder zusätzlich kann aber auch die Rungenkopfaufnahme in wenigstens ein Langloch des Rungenkopfs eingreifen und entlang des wenigstens einen Langlochs gegenüber dem Rungenkopf in der Höhe verstellbar sein. Auch auf diese Weise wird eine einfache und zuverlässige Verstellbarkeit bereitgestellt, wobei das Schwenkgelenk zum Freigeben oder Blockieren desselben einfach gegenüber der Rungenkopfaufnahme verstellt werden kann.

Damit der Rungenkopf in der eingeschobenen Stellung zwangsweise in die Ausgangsstellung übergeht, selbst wenn der Rungenkopf in der ausgezogenen Stellung zur Seite geschwenkt war, kann der Rungenkopf und/oder die Rungenkopfaufnahme wenigstens eine Einlaufschräge aufweisen, an der der Rungenkopf und die Rungenkopfaufnahme aneinander abgleiten können, wenn der Rungenkopf aus der ausgezogenen Stellung in die eingeschobene Stellung verstellt wird. Beim Abgleiten an der Einlaufschräge wird der Rungenkopf aus der zur Seite geschwenkten Stellung zurück in die Ausgangsstellung geschwenkt. Wenn sich der Rungenkopf in der ausgezogenen Stellung bereits in der Ausgangsstellung in Bezug auf die Rungenkopfaufnahme befindet und aus dieser Position in die eingeschobene Stellung verstellt wird, kann die wenigstens eine Einlaufschräge bedarfsweise funktionslos bleiben, muss also nicht an der Rungenkopfaufnahme abgleiten. Der Rungenkopf bleibt dann beim Einschieben von der ausgezogenen Stellung in die eingeschobene Stellung in der Ausgangsposition. Die Ausgangsstellung kann vom Rungenkopf also bedarfsweise unabhängig davon eingenommen werden, ob sich der Rungenkopf in der eingeschobenen Stellung oder in der ausgezogenen Stellung befindet. Die Ausgangsstellung kann somit durch eine relative Winkelstellung zur Rungenkopfaufnahme definiert sein, aber nicht durch eine Anordnung in Längsrichtung zur Rungenkopfaufnahme. Mit anderen Worten kann es darauf ankommen, wie der Rungenkopf wenigstens teilweise gegenüber dem Schwenkgelenk geschwenkt ist und nicht wie der Rungenkopf und/oder das Schwenkgelenk gegenüber der Rungenkopfaufnahme, insbesondere in Längsrichtung, verstellt ist. Gleiches gilt prinzipiell auch für die zur Seite geschwenkte Stellung des Rungenkopfs, jedoch mit der Einschränkung dass der Rungenkopf diese zur Seite geschwenkte Stellung in der eingeschobenen Stellung des Rungenkopfs vorzugsweise gar nicht einnehmen kann.

Konstruktiv einfach und zugleich sehr funktional kann es sein, wenn die Rungenkopfaufnahme wenigstens im Wesentlichen als C-Profil ausgebildet ist. In einer derartigen Rungenkopfaufnahme kann der Rungenkopf einfach und definiert in Längsrichtung der Rungenkopfaufnahme verschoben werden, insbesondere zwischen der eingeschobenen Stellung und der ausgezogenen Stellung wie auch wieder zurück. Das C-Profil kann zudem gegenüber einem geschlossenen Profil eine Aussparung bereitstellen, in die der Rungenkopf in der zur Seite geschwenkten Stellung wenigstens teilweise eingreift. Durch die Aussparung wird also Platz für den Rungenkopf geschaffen, so dass dieser wenigstens teilweise zur Seite geschwenkt werden kann, obwohl der Rungenkopf wenigstens teilweise in der Rungenkopfaufnahme aufgenommen ist.

Im Falle einer als C-Profil ausgebildeten Rungenaufnahme kann die wenigstens eine Einlaufschräge an einer Führung des Rungenkopfes derart vorgesehen sein, dass die wenigstens eine Einlaufschräge beim Einschieben des insbesondere zur Seite geschwenkten Rungenkopfs von der ausgezogenen Stellung in die eingeschobene Stellung mit dem C-Profil angrenzend zu der Aussparung zusammenwirkt. Die Rungenkopfaufnahme kann so eine besonders zweckmäßige Funktionalität bereitstellen, ohne dass eine aufwendige und somit teure Ausgestaltung der Rungenkopfaufnahme erforderlich ist. Die Einlaufschrägen sind vorzugsweise gegenüber der Längsrichtung der Runge geneigt und zwar vorzugsweise in Richtung der dem Laderaum zugeordneten Seite. Dabei muss die Einlaufschräge nicht eben sein. Die Einlaufschräge kann auch gebogen sein oder gebogene Abschnitte aufweisen. Zudem ist es zur entsprechenden Führung des Rungenkopfs zweckmäßig, wenn das obere Ende der Einlaufschräge weiter außen bezogen auf die Rungen angeordnet ist als das untere Ende. Weiter außen bedeutet dabei insbesondere weiter in Richtung der dem Laderaum zugeordneten Seite der Runge.

Eine konstruktiv einfache und zugleich zuverlässige Höhenverstellung des Rungenkopfs kann erreicht werden, wenn der Rungenkopf zum Höhenverstellen des Rungenkopfs mit einer höhenverstellbaren und von einer Verstelleinrichtung angetriebenen Stellstange verbunden ist. Über die Stellstange kann der Rungenkopf dann einfach gegenüber der Rungenaufnahme ausgeschoben oder eingezogen werden. Zudem kann die Stellstange bedarfsweise einfach und platzsparend wenigstens teilweise in der Rungenaufnahme aufgenommen sein. Der Antrieb des Rungenkopfes bzw. der Stellstange gegenüber der Rungenkopfaufnahme zum Zwecke der Höhenverstellung des Dachs kann im Übrigen in einfacher und zuverlässiger Weise mechanisch, hydraulisch und/oder pneumatisch erfolgen. Die Verstelleinrichtung kann dabei bedarfsweise über einen Handhebel betätigt werden.

Um in der Fahrstellung des Dachs einen stabilen und steifen Planenaufbau bereitstellen zu können, kann sich der Rungenkopf in wenigstens einer eingeschobenen Stellung gegenüber der Rungenkopfaufnahme abstützen. Dabei ist es konstruktiv besonders einfach, wenn sich der Rungenkopf in der wenigstens einen eingeschobenen Stellung auf der Rungenkopfaufnahme aufliegt. So kann eine zuverlässige Kraftableitung an die Rungenkopfaufnahme sichergestellt und ein übermäßiges Rütteln des Rungenkopfs in der Rungenkopfaufnahme vermieden werden.

Zur zuverlässigen Verbindung des Rungenkopfs mit dem Dach, insbesondere mit einem Längsholm des Dachs, bietet es sich grundsätzlich an, wenn der Rungenkopf eine wenigstens teilweise U-förmige Längsholmaufnahme zur Aufnahme eines Dachs, insbesondere Längsholms, eines Planenaufbaus aufweist.

Damit das Dach einfach in unterschiedlichen Fahrhöhen, also Fahrstellungen, angeordnet werden kann, kann die Rungenkopfaufnahme höhenverstellbar gegenüber einem Rungenkörper angeordnet sein. Besonders einfach und stabil ist es dabei, wenn die Rungenkopfaufnahme im Rungenkörper gehalten ist.

Zur Arretierung des Dachs in den unterschiedlichen Fahrstellungen ist es zweckmäßig, wenn die Rungenkopfaufnahme in unterschiedlichen Höhenstellungen bezogen auf den Rungenkörper gegenüber und/oder an dem Rungenkörper festlegbar ist. Die Höhe des Dachs in der jeweiligen Fahrstellung kann davon abhängig sein, in welcher Position die Rungenkopfaufnahme gegenüber dem Rungenköper am Rungenkörper festgelegt wird. Zur einfachen und zuverlässigen Höhenverstellung des Rungenkopfs kann die Stellstange und/oder der Rungenkopf gegenüber dem Rungenkörper höhenverstellbar vorgesehen sein.

Besonders zweckmäßig für die Nutzung des Planenaufbaus ist es, wenn das Dach aus unterschiedlich hohen Fahrstellungen jeweils bereichsweise zum Be- und/oder Entladen geliftet werden kann. Zu diesem Zweck kann der Rungenkopf in wenigstens einer Höhenstellung, vorzugsweise mehreren Höhenstellungen, insbesondere allen Höhenstellungen, der Rungenkopfaufnahme bezogen auf den Rungenkörper von der eingeschobenen Stellung in die ausgezogene Stellung und zurück verstellbar sein. Mithin kann die Rungenaufnahme gegenüber dem Rungenkörper höhenverstellbar sein, um die grundsätzliche Höhe bzw. Fahrstellung des Dachs festzulegen. Unabhängig von der entsprechenden Fahrhöhe bzw. der relativen Anordnung von Rungenkopfaufnahme und Rungenkörper kann das Verstellen des Rungenkopfs von der eingeschobenen Stellung in die ausgezogene Stellung und zurück auf dieselbe, insbesondere die zuvor beschriebene, Weise erfolgen.

Damit der Planenaufbau in unterschiedlich hohen Fahrstellungen des Dachs jeweils für das Fahren besonders geeignet ist, also die erforderliche Langlebigkeit, Festigkeit und Steifigkeit bereitstellt, kann der Rungenkopf in wenigstens einer Höhenstellung, vorzugsweise mehreren Höhenstellungen, insbesondere allen Höhenstellungen, der Rungenkopfaufnahme bezogen auf den Rungenkörper in der eingeschobenen Stellung von der Rungenkopfaufnahme gestützt werden. Diese Abstützung wird dabei besonders einfach und zuverlässig erreicht, wenn der Rungenkopf in der wenigstens einen Fahrstellung des Dachs auf der Rungenkopfaufnahme aufliegt.

In Bezug auf den Planenaufbau sind bei einer ersten besonders bevorzugten Ausgestaltung an den vier Ecken eines Ladebodens sich wenigstens im Wesentlichen senkrecht zum Ladeboden nach oben erstreckende Eckrungen vorgesehen, die weiter vorzugsweise wenigstens teilweise nach einem der Ansprüche 1 bis 13 ausgebildet sind. Ein derartiger Planenaufbau stellt letztlich die zuvor beschriebenen Funktionalitäten bereit und eröffnet dabei die ebenfalls zuvor im Zusammenhang mit der Runge diskutierten Vorteile.

Die Erfindung wird nachträglich anhand einer lediglich ein Ausführungsbeispiel darstellenden Zeichnung näher erläutert. In der Zeichnung zeigt
- Fig. 1: ein Nutzfahrzeug mit einem erfindungsgemäßen Planenaufbau in einer perspektivischen, schematischen Darstellung,
- Fig. 2: eine erfindungsgemäße Runge des Planenaufbaus aus Fig. 1 in einer perspektivischen Ansicht,
- Fig. 3A-B: ein Detail der Runge aus Fig. 2 in perspektivischer Ansicht von vorne und von hinten,
- Fig. 4A-C: das Detail der Runge gemäß Fig. 3 in der eingeschobenen Stellung, der ausgezogenen Stellung und einer Zwischenstellung in einer Seitenansicht und
- Fig. 5A-C: das Detail der Runge gemäß Fig. 3 in der eingeschobenen Stellung, der ausgezogenen Stellung und einer Zwischenstellung in einer perspektivischen Ansicht.
- Fig. 6: die Runge aus Fig. 2 in einer Schnittansicht quer zur Runge.

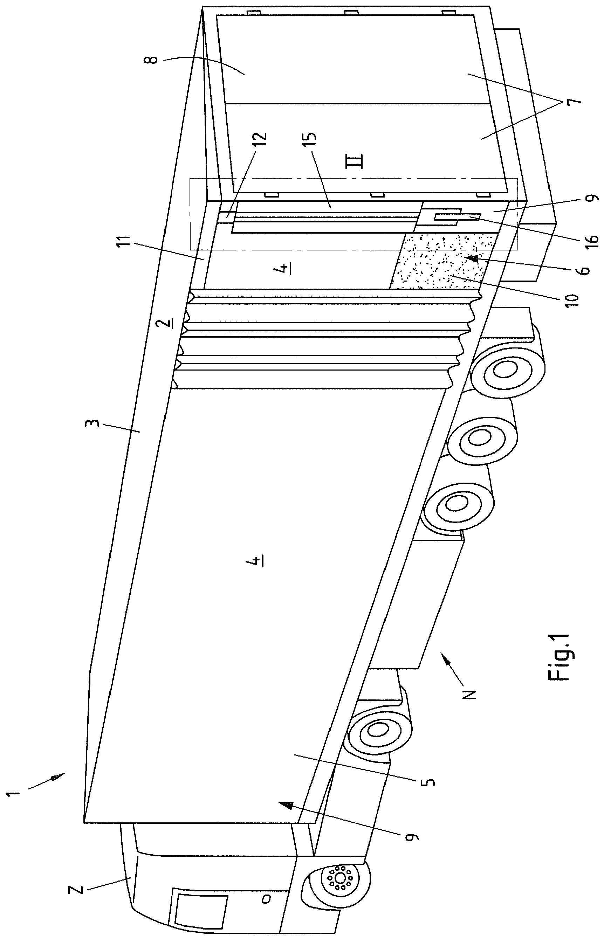

In der Fig. 1 ist ein von einer Zugmaschine Z gezogenes Nutzfahrzeug N in Form eines Sattelaufliegers dargestellt. Das Nutzfahrzeug N weist einen Planenaufbau 1 in Form eins Curtainsiders auf. Der Planenaufbau 1 weist eine Plane 2 am Dach 3 und jeweils eine Plane 4 an den beiden Seitenwänden 5 des Plananaufbaus 1 auf. Die beiden Planen 4 an den Seitenwänden 5 können nach vorne oder nach hinten verschoben werden, um den Zugang zu dem vom Planenaufbau 1 umschlossenen Laderaum 6 freizugeben. Ein weiterer Zugang zum Laderaum 6 kann durch die Flügeltüren 7 der Rückwand 8 erfolgen. Die Plane 4 an der vorderen Seitenwand 5 des Planenaufbaus 1 ist teilweise aufgeschoben, so dass die hintere linke Runge 9 in Form einer Eckrunge gut erkennbar ist. Die Runge 9 erstreckt sich ausgehend etwa vom Ladeboden 10 bis zum Dach 3 des Planenaufbaus 1, das von der Runge 9 teilweise getragen wird. Das Dach 3 weist an den Längsseiten sich in Längsrichtung des Dachs 3 erstreckende Längsholme 11 auf, die über nicht dargestellte Spriegel verbunden sind. Die hintere Ecke des Dachs 3 ist über die Runge 9 angehoben, die in ihrer Länge verstellbar ist. Mit anderen Worten handelt es sich um eine höhenverstellbare Runge 9. Das Dach 3 kann beispielsweise nur bereichsweise über die eine hintere Runge 9 angehoben sein. Das Dach 3 kann aber auch über dessen gesamte Länge einseitig angehoben sein, wenn das Dach 3 auch durch die vordere Runge 9 angehoben ist.

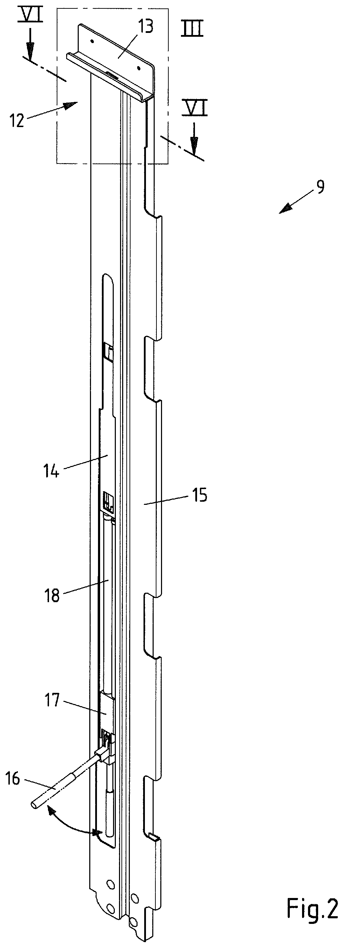

Die hintere Runge 9 ist genauer in der Fig. 2 dargestellt. Die Runge 9 weist am oberen Ende einen Rungenkopf 12 mit einer U-förmigen Längsholmaufnahme 13 zum Verbinden des Rungenkopfs 12 mit dem zugeordneten Längsholm 11 des Dachs 3 auf. Der Rungenkopf 12 ist wenigstens teilweise in einer Rungenkopfaufnahme 14 aufgenommen, die ihrerseits wenigstens teilweise in einem Rungenkörper 15 aufgenommen ist. Am unteren Ende der Runge 9 ist ein Handhebel 16 zum Anheben und Absenken des Rungenkopfs 12 vorgesehen. Bei der dargestellten und insoweit bevorzugten Runge 9 ist der Handhebel 16 mit einer hydraulischen Verstelleinrichtung 17 verbunden, über die eine Stellstange 18 nach oben gedrückt und wieder abgesenkt werden kann. Zum Anheben der Stellstange 18 wird der Handhebel 16 hin und her geschwenkt, wie dies mit dem Doppelpfeil angedeutet ist. Das Absenken der Stellstange 18 kann beispielsweise durch Drehen des Handhebels 16 erfolgen. Andere Arten von Verstelleinrichtungen könnten ebenfalls vorgesehen sein.

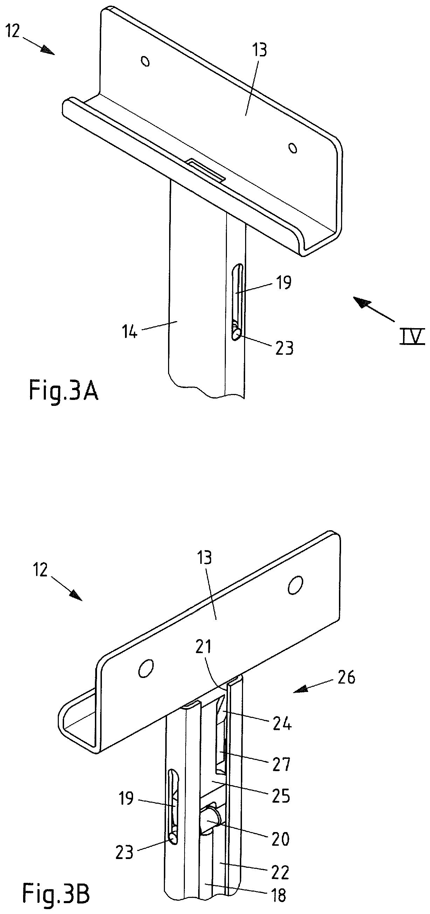

In der Fig. 3A-B ist der Rungenkopf 12 mit dem oberen Teil der Rungenkopfaufnahme 14 dargestellt, in der der Rungenkopf 12 teilweise eingelassen ist. Die Rungenkopfaufnahme 14 ist als C-Profil ausgebildet, in dem die Stellstange 18 wenigstens teilweise aufgenommen ist. Die Stellstange 18 ist direkt mit dem Rungenkopf 12 verbunden, um den Rungenkopf 12 teilweise nach oben aus der Rungenkopfaufnahme 14 herausschieben zu können. Zu diesem Zweck ist der Rungenkopf 12 in Langlöchern 19 der Rungenkopfaufnahme 14 verschiebbar gehalten. Die Langlöcher 19 erstrecken sich dabei vorzugsweise wenigstens im Wesentlichen in Längsrichtung der Runge 9. Zudem ist die Stellstange 18 über ein Schwenkgelenk 20 mit dem Rungenkopf 12 verbunden, das mit dem Rungenkopf 12 entlang der Langlöcher 19 der Rungenkopfaufnahme 14 höhenverstellbar ist.

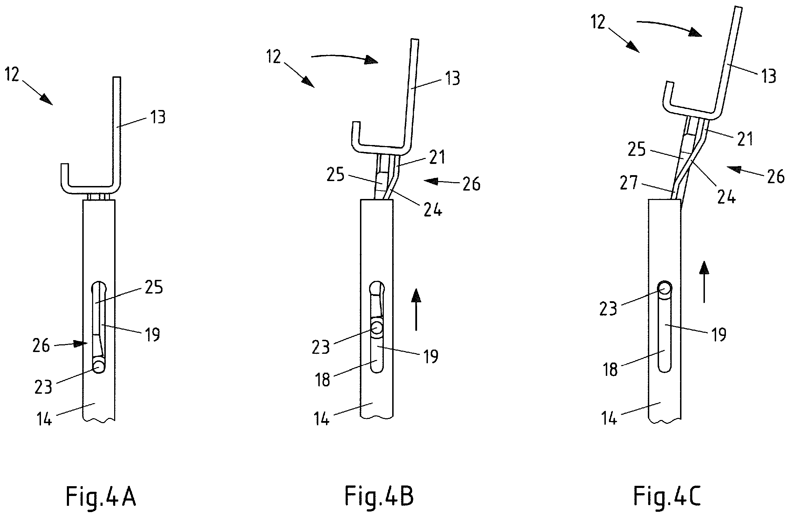

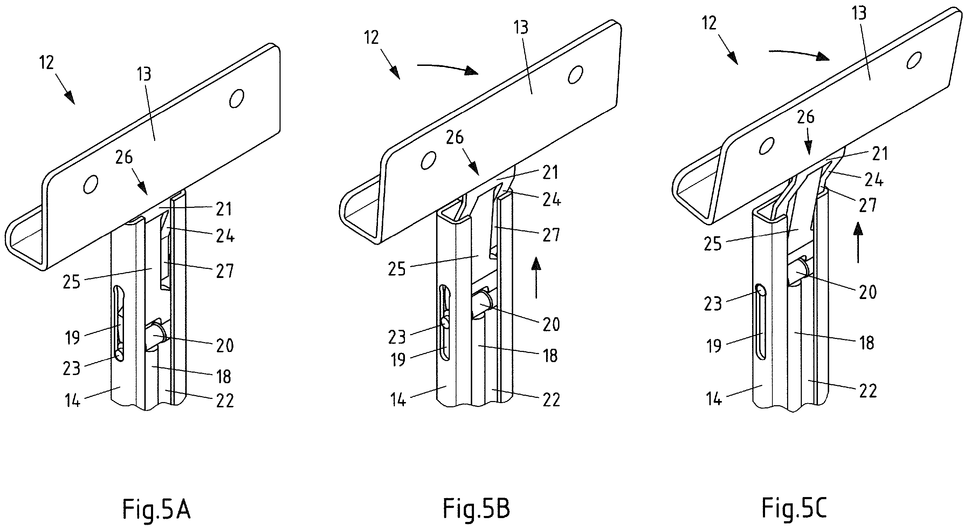

Das Verstellen des Rungenkopfs 12 gegenüber der Rungenkopfaufnahme 14 von einer eingeschobenen Stellung in eine ausgezogene Stellung ist in den Fig. 4A-C und Fig. 5A-C mit die Bewegungen verdeutlichenden Pfeilen aus unterschiedlichen Blickwinkeln dargestellt. In der Fig. 4A und 5A ist der Rungenkopf 12 in einer eingeschobenen Stellung dargestellt. In dieser Stellung ist der Rungenkopf 12 formschlüssig und nur mit einem geringen Spiel in der Rungenkopfaufnahme 14 aufgenommen. Der Rungenkopf 12 kann also in der eingeschobenen Stellung nicht um das Schwenkgelenk 20 geschwenkt werden, da der Rungenkopf 12 formschlüssig in der Rungenkopfaufnahme 14 aufgenommen ist. Es kann in der eingeschobenen Stellung des Rungenkopfs 12 wenn überhaupt nur zu sehr geringen seitlichen Relativbewegungen zwischen dem Rungenkopf 12 und der Rungenkopfaufnahme 14 kommen. Zu diesem Zweck ist wenigstens eine Anschlagfläche 21 vorgesehen, mit der der Rungenkopf 12 in Anlage an die Rungenkopfaufnahme 14 gelangt sobald der Rungenkopf 12 um das Schwenkgelenk 20 zu einer Seite geschwenkt wird. Bei der dargestellten und insoweit bevorzugten Rungenkopfaufnahme 14 gelangt die Anschlagfläche 21 angrenzend zur Aussparung 22 im C-Profil der Rungenkopfaufnahme 14 in Anlage an die Rungenkopfaufnahme 14. Des Weiteren liegen Führungen 23 des Rungenkopfs 12 an den unteren Enden der Langlöcher 19 an, so dass sich der Rungenkopf 12 in der eingeschobenen Stellung gegenüber der Rungenkopfaufnahme 14 abstützt und so die Gewichtskräfte des Dachs 3 an die Rungenkopfaufnahme 14 ableitet.

Aus der eingeschobenen Stellung kann der Rungenkopf 12 zunächst nach oben verstellt werden. Dabei gleitet der Rungenkopf 12 über in die Langlöcher 19 der Rungenkopfaufnahme 14 eingreifenden Führungen 23 entlang der Langlöcher 19 nach oben und zunehmend weiter aus der Rungenkopfaufnahme 14 heraus. Mit dem Verschieben des Rungenkopfs 12 wird beispielweise das Dach 3 einseitig angehoben und somit geneigt. Da die Breite des Dachs 3 dabei unverändert bleibt, wird der Rungenkopf 12 beim weiteren Verstellen nach oben vom Dach 3 weiter in Richtung des Laderaums 6 bzw. in Richtung der gegenüberliegenden Seitenwand 5 gezogen. Aus diesem Grund gleitet der Rungenkopf 12 über Einlaufschrägen 24 an der Rungenkopfaufnahme 14 ab und schwenkt in dieser Weise mit weiterer Verstellung weiter zur Seite. In den Fig. 4B und 5B ist eine Zwischenstellung des Rungenkopfs 12 zwischen der eingeschobenen Stellung und der ausgezogenen Stellung des Rungenkopfs 12 dargestellt.

In der Fig. 4C und 5C dargestellten ausgezogenen Stellung des Rungenkopfes 12 liegen die Führungen 23 des Rungenkopfs 12 an dem oberen Enden der Langlöcher 19 der Rungenkopfaufnahme 14 an. Die ausgezogene Stellung ist daher wie die eingezogene Stellung eine Endstellung beim Verstellen des Rungenkopfs 12 in Bezug auf die Rungenkopfaufnahme 14. Der Rungenkopf 12 ist durch die durch das nicht dargestellte Dach 3 aufgebrachten Kräfte weit zur Seite, insbesondere in Richtung des Laderaums 6, geschwenkt und liegt bedarfsweise formschlüssig an der Rungenkopfaufnahme 14 an. Dabei ragt der Rungenkopf 12 abschnittsweise in die Aussparung 22 der Rungenkopfaufnahme 14 in Form des C-Profils hinein.

Das Verstellen des Rungenkopfs 12 aus der ausgezogenen Stellung in die eingeschobene Stellung erfolgt wie in den Fig. 4A-C und Fig. 5A-C dargestellt und zuvor beschrieben, nur in der entgegengesetzten Reihenfolge. Insbesondere gleitet der Rungenkopf 12 über die Einlaufschrägen 24 an der Rungenkopfaufnahme 14 ab und wird aus der gegenüber der Rungenkopfaufnahme 14 zur Seite geschwenkten Stellung gemäß den Fig. 4C und 5C in der ausgezogenen Stellung beim Einschieben des Rungenkopfs 12 in die Rungenkopfaufnahme 14 zwangsweise zurück in die Ausgangsstellung in Bezug auf die Rungenkopfaufnahme 14 geschwenkt wie sie in der Fig. 4A und Fig. 5A dargestellt ist. Eine einzige Einlaufschräge 24 könnte bedarfsweise auch ausreichend sein.

Bei der dargestellten und insoweit bevorzugten Runge 9 ist der Rungenkopf 12 derart über das Schwenkgelenk 20 mit der Rungenkopfaufnahme 14 verbunden, dass im Wesentlichen der gesamte Rungenkopf 12 um das Schwenkgelenk 20 gegenüber der Rungenkopfaufnahme 14 zur Seite und wieder in die Ausgangsstellung zurück geschwenkt werden kann. Dies ist jedoch nicht erforderlich. Das Schwenkgelenk 20 könnte auch so vorgesehen sein, dass nur ein Teil des Rungenkopfs 12 gegenüber der Rungenkopfaufnahme 14 zur Seite und wieder zurück in die Ausgangsstellung geschwenkt werden kann, während ein anderer Teil des Rungenkopfs 12 seine Lage zur Rungenkopfaufnahme 14 beibehält.

Bei der dargestellten und insoweit bevorzugten Runge 9 ist nicht nur der Rungenkopf 12 gegenüber der Rungenkopfaufnahme 14 höhenverstellbar vorgesehen, sondern auch die Rungenkopfaufnahme 14 gegenüber dem Rungenkörper 15. Die Verstellung der Rungenkopfaufnahme 14 gegenüber dem Rungenkörper 15 nach oben erfolgt bei der dargestellten und insoweit bevorzugten Runge 9 mit Hilfe des Rungenkopfs 12. Wenn der Rungenkopf 12 aus der eingeschobenen Stellung in die ausgezogene Stellung verstellt wird, gelangen die Führungen 23 in Anlage an die oberen Enden der Langlöcher 19 der Rungenkopfaufnahme 14. Es bildet sich ein Formschluss zwischen dem Rungenkopf 12 und der Rungenkopfaufnahme 14, der grundsätzlich auch anderweitig bereitgestellt werden könnte. Infolge des Formschlusses kann der Rungenkopf 12 und die Rungenkopfaufnahme 14 zusammen weiter nach oben verstellt werden und zwar gegenüber dem Rungenkörper 15. So kann die Rungenkopfaufnahme 14 aus einer unteren Stellung in Bezug auf den Rungenkörper 15 in wenigstens eine weiter oben angeordnete Stellung gelangen. Die Rungenkopfaufnahme 14 kann so wenigstens zwei Positionen auf unterschiedlichen Höhen in Bezug zum Rungenkörper 15 einnehmen. In den entsprechenden Stellungen kann die Rungenkopfaufnahme 14 gegenüber dem Rungenkörper 15 auch festgelegt werden. Somit kann jede dieser Stellungen zwischen der Rungenkopfaufnahme 14 und dem Rungenkörper 15 eine Fahrstellung des Planenaufbaus 1, also eine Fahrhöhe des Dachs 3, definieren. Das Verstellen des Rungenkopfs 12 gegenüber der Rungenkopfaufnahme 14, also das Liften des Dachs 3, kann dann unabhängig von der jeweiligen Stellung der Rungenkopfaufnahme 14 relativ zum Rungenkörper 15 beispielsweise auf die zuvor beschrieben Weise erfolgen.

Das Absenken der Rungenkopfaufnahme 14 gegenüber dem Rungenkörper 15 kann bedarfsweise auch mittels der Stellstange 18 und dem Rungenkopf 12 erfolgen. Wenn der Rungenkopf 12 in der eingeschobenen Stellung angeordnet ist und über die Stellstange 18 weiter nach unten bewegt wird, entsteht ein Formschluss zwischen dem Rungenkopf 12 und der Rungenkopfaufnahme 14, wodurch der Rungenkopf 12 die Rungenkopfaufnahme 14 nach unten bewegt. In einer entsprechenden unteren Stellung kann die Rungenkopfaufnahme 14 dann wieder an dem Rungenkörper 15 festgelegt werden.

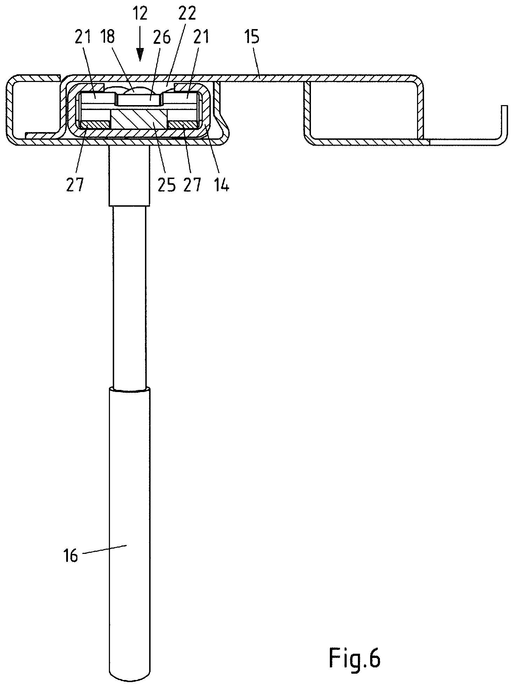

In der Fig. 6 ist ein Schnitt durch die zuvor beschriebene Runge 9 dargestellt. In dem Rungenkörper 15, an dem der Handhebel 16 und die Verstelleinrichtung 17 zur Höhenverstellung der Runge 9 vorgesehen sind, ist eine Rungenkopfaufnahme 14 mit einem C-förmigen Querschnitt aufgenommen. Die Rungenkopfaufnahme 14 kann gegenüber dem Rungenkörper 15 in wenigstens zwei, insbesondere drei oder vier, unterschiedliche Stellungen verstellt und in diesen Stellungen gegenüber dem Rungenkörper 15 festgelegt werden. Dies kann etwa formschlüssig beispielsweise durch Einstecken eines Bolzen in den Rungenkörper 15 erfolgen, auf dem sich die Rungenkopfaufnahme 14 abstützen kann. Der Rungenkopf 12 weist in dem in der Rungenkopfaufnahme 14 aufgenommenen Abschnitt neben einer Anbindung an die Stellstange 18, einem Schwenkgelenk 20 und Führungen 23 zum Eingreifen in Langlöcher 19 der Rungenkopfaufnahme 14 noch eine zentrale Stütze 25 zum Abstützen der Längsholmaufnahme 13 gegenüber der Rungenkopfaufnahme 14 und/oder der Stellstange 18 auf. Seitlich zu dieser zentralen Stütze 25 ist eine Führungseinrichtung 26 vorgesehen, die einerseits Anschlagflächen 21 für die Anlage an der Rungenkopfaufnahme 14 in der eingeschobenen Stellung, Anschlagflächen 27 für die Anlage an der Rungenkopfaufnahme 14 in der ausgezogenen Stellung und dazwischen vorgesehene Einlaufschrägen 24 zum Schwenken des Rungenkopfs 12 beim Verstellen des Rungenkopfs 12 gegenüber der Rungenkopfaufnahme 14 infolge eines Abgleitens der Einlaufschrägen 24 an der Rungenkopfaufnahme 14 aufweist.

### Bezugszeichenliste

- 1: Planenaufbau
- 2: Plane
- 3: Dach
- 4: Plane
- 5: Seitenwand
- 6: Laderaum
- 7: Flügeltür
- 8: Rückwand
- 9: Runge
- 10: Ladeboden
- 11: Längsholm
- 12: Rungenkopf
- 13: Längsholmaufnahme
- 14: Rungenkopfaufnahme
- 15: Rungenkörper
- 16: Handhebel
- 17: Verstelleinrichtung
- 18: Stellstange
- 19: Langlöcher
- 20: Schwenkgelenk
- 21: Anschlagfläche
- 22: Aussparung
- 23: Führungen
- 24: Einlaufschrägen
- 25: Stütze
- 26: Führungseinrichtung
- 27: Anschlagfläche

## Patentansprüche

1. Runge (9), insbesondere Eckrunge, für einen Planenaufbau (1) eines Nutzfahrzeugs (N), insbesondere Lastkraftwagens, Anhängers oder Sattelaufliegers, mit einem wenigstens einseitig höhenverstellbaren Dach (3), umfassend einen Rungenkopf (12) zum wenigstens teilweise Tragen eines Dachs (3) und eine Rungenkopfaufnahme (14) zur wenigstens teilweisen Aufnahme des Rungenkopfs (12) in einer in die Rungenkopfaufnahme (14) eingeschobenen Stellung und in einer aus der Rungenkopfaufnahme (14) ausgezogenen Stellung, wobei der Rungenkopf (12) und die Rungenkopfaufnahme (14) durch ein Schwenkgelenk (20) zum Schwenken des Rungenkopfs (12) gegenüber der Rungenkopfaufnahme (14) verbunden sind,
**dadurch gekennzeichnet, dass**
der Rungenkopf (12) in der ausgezogenen Stellung derart aus der Rungenkopfaufnahme (14) ausgezogen ist, dass das wenigstens teilweise Schwenken des Rungenkopfs (12) um das Schwenkgelenk (20) von einer Ausgangsstellung in eine verschwenkte Stellung freigegeben ist, und dass der Rungenkopf (12) in der eingeschobenen Stellung derart in der Rungenkopfaufnahme (14) aufgenommen ist, dass das Schwenken des Rungenkopfs (12) aus der Ausgangsstellung um das Schwenkgelenk (20) wenigstens im Wesentlichen blockiert ist.

2. Runge nach Anspruch 1,
**dadurch gekennzeichnet, dass**
das Schwenkgelenk (20) höhenverstellbar gegenüber der Rungenkopfaufnahme (14) und/oder ortsfest gegenüber dem Rungenkopf (12) vorgesehen ist.

3. Runge nach Anspruch 1 oder 2,
**dadurch gekennzeichnet, dass**
der Rungenkopf (12) in wenigstens ein Langloch (19) der Rungenkopfaufnahme (14) eingreift und entlang des wenigstens einen Langlochs (19) gegenüber der Rungenkopfaufnahme (14) höhenverstellbar ist und/oder dass die Rungenkopfaufnahme (14) in wenigstens ein Langloch (19) des Rungenkopfs (12) eingreift und entlang des wenigstens einen Langlochs (19) gegenüber dem Rungenkopf (12) höhenverstellbar ist.

4. Runge nach einem der Ansprüche 1 bis 3,
**dadurch gekennzeichnet, dass**
der Rungenkopf (12) und/oder die Rungenkopfaufnahme (14) wenigstens eine Einlaufschräge (24) derart aufweist, dass der Rungenkopf (12) und die Rungenkopfaufnahme (14) beim Verstellen von der ausgezogenen Stellung in die eingeschobene Stellung über die wenigstens eine Einlaufschräge (24) aneinander abgleiten und der Rungenkopf (12) so von einer verschwenkten Stellung zwangsweise in eine Ausgangsstellung zurück geschwenkt wird.

5. Runge nach einem der Ansprüche 1 bis 4,
**dadurch gekennzeichnet, dass**
die Rungenkopfaufnahme (14) wenigstens im Wesentlichen als C-Profil ausgebildet ist und dass, vorzugsweise, der Rungenkopf (12) in der verschwenkten Stellung wenigstens teilweise in die Aussparung (22) des C-Profils eingreift.

6. Runge nach Anspruch 5,
**dadurch gekennzeichnet, dass**
die wenigstens eine Einlaufschräge (24) an einer Führungseinrichtung (26) derart vorgesehen ist, dass die wenigstens eine Einlaufschräge (24) beim Einschieben des zur Seite geschwenkten Rungenkopfs (12) von der ausgezogenen Stellung in die eingeschobene Stellung mit dem C-Profil angrenzend zu der Aussparung (21) zusammenwirkt.

7. Runge nach einem der Ansprüche 1 bis 6,
**dadurch gekennzeichnet, dass**
der Rungenkopf (12) zum Höhenverstellen des Rungenkopfs (12) mit einer, vorzugsweise wenigstens teilweise in der Rungenaufnahme (14) aufgenommenen, höhenverstellbaren und von einer Verstelleinrichtung (17) angetriebenen Stellstange (18) verbunden ist und dass, vorzugsweise, die Stellstange (18) mechanisch, hydraulisch und/oder pneumatisch gegenüber der Rungenkopfaufnahme (14) höhenverstellbar ist.

8. Runge nach einem der Ansprüche 1 bis 7,
**dadurch gekennzeichnet, dass**
sich der Rungenkopf (12) in wenigstens einer eingeschobenen Stellung gegenüber der Rungenkopfaufnahme (14) abstützt und dass, vorzugsweise, der Rungenkopf (12) in wenigstens einer eingeschobenen Stellung auf der Rungenkopfaufnahme (14) aufliegt.

9. Runge nach einem der Ansprüche 1 bis 8,
**dadurch gekennzeichnet, dass**
der Rungenkopf (12) eine wenigstens teilweise U-förmige Längsholmaufnahme (13) zur Aufnahme eines Dachs (3), insbesondere Längsholms (11), eines Planenaufbaus (1) aufweist.

10. Runge nach einem der Ansprüche 1 bis 9,
**dadurch gekennzeichnet, dass**
die Rungenkopfaufnahme (14) höhenverstellbar gegenüber einem Rungenkörper (15) an, vorzugsweise in, dem Rungenkörper (15) gehalten ist.

11. Runge nach Anspruch 10,
**dadurch gekennzeichnet, dass**
die Rungenkopfaufnahme (14) in unterschiedlichen Höhenstellungen bezogen auf den Rungenkörper (15) gegenüber, vorzugsweise an, dem Rungenkörper (15) festlegbar ist und dass, vorzugsweise, die Stellstange und/oder der Rungenkopf (12) gegenüber dem Rungenkörper (15) höhenverstellbar ist.

12. Runge nach Anspruch 10 oder 11,
**dadurch gekennzeichnet, dass**
der Rungenkopf (12) in wenigstens einer Höhenstellung, vorzugsweise mehreren Höhenstellungen, insbesondere allen Höhenstellungen, der Rungenkopfaufnahme (14) bezogen auf den Rungenkörper (15) von der eingeschobenen Stellung in die ausgezogene Stellung und zurück verstellbar ist.

13. Runge nach einem der Ansprüche 10 bis 12,
**dadurch gekennzeichnet, dass**
dass der Rungenkopf (12) in wenigstens einer Höhenstellung, vorzugsweise mehreren Höhenstellungen, insbesondere allen Höhenstellungen, der Rungenkopfaufnahme (14) bezogen auf den Rungenkörper (15) in der eingeschobenen Stellung von der Rungenkopfaufnahme (14) gestützt wird, vorzugsweise auf der Rungenkopfaufnahme (14) aufliegt.

14. Planenaufbau (1) eines Nutzfahrzeugs (N), insbesondere Lastkraftwagens, Anhängers oder Sattelaufliegers, mit wenigstens einer das Dach (3) wenigstens teilweise stützenden Runge (9), insbesondere Eckrunge,
**dadurch gekennzeichnet, dass**
die wenigstens eine Runge (9) nach einem der Ansprüche 1 bis 13 ausgebildet ist und dass das Dach (3) über die wenigstens eine Runge (9) von wenigstens einer parallel zum Ladeboden (10) angeordneten Fahrstellung in wenigstens eine schräg zum Ladeboden (10) geneigte Ladestellung und zurück verstellbar ist.

15. Planenaufbau nach Anspruch 14,
**dadurch gekennzeichnet, dass**
den vier Ecken eines Ladebodens (10) zugeordnete und sich wenigstens im Wesentlichen senkrecht zum Laderboden (10) nach oben erstreckende Eckrungen (9) nach einem der Ansprüche 1 bis 13 vorgesehen sind.

## Claims

1. Stanchion (9), in particular corner stanchion, for a tarpaulin body (1) of a commercial vehicle (N), in particular a truck, trailer or semitrailer, having a roof (3) which is adjustable in height on at least one side, comprising a stanchion head (12) for at least partially supporting a roof (3) and a stanchion head receiver (14) for at least partially receiving the stanchion head (12) in a position inserted into the stanchion head receiver (14) and in a position retracted from the stanchion head receiver (14), wherein the stanchion head (12) and the stanchion head receiver (14) are connected by a swivel articulation (20) for swivelling the stanchion head (12) relative to the stanchion head receiver (14),
**characterised in that** the stanchion head (12) is retracted from the stanchion head receiver (14) in the retracted position in such a way that at least partial swivelling of the stanchion head (12) about the swivel articulation (20) from a starting position into a swivelled position is enabled, and **in that** the stanchion head (12) is received in the stanchion head receiver (14) in the inserted position in such a way that swivelling of the stanchion head (12) from the starting position about the swivel articulation (20) is at least substantially blocked.

2. Stanchion according to Claim 1,
**characterised in that** the swivel articulation (20) is provided so as to be adjustable in height relative to the stanchion head receiver (14) and/or fixed in position relative to the stanchion head (12).

3. Stanchion according to Claim 1 or 2,
**characterised in that** stanchion head (12) engages into at least one elongate hole (19) of the stanchion head receiver (14) and is adjustable in height along the at least one elongate hole (19) relative to the stanchion head receiver (14), and/or **in that** the stanchion head receiver (14) engages into at least one elongate hole (19) of the stanchion head (12) and is adjustable in height along the at least one elongate hole (19) relative to the stanchion head (12).

4. Stanchion according to any one of Claims 1 to 3,
**characterised in that** the stanchion head (12) and/or the stanchion head receiver (14) comprises at least one entry chamfer (24) such that the stanchion head (12) and the stanchion head receiver (14) slide on one another by means of the at least one entry chamfer (24) during adjustment from the retracted position into the inserted position, and the stanchion head (12) is thus forcibly swivelled back from a swivelled position into a starting position.

5. Stanchion according to any one of Claims 1 to 4,
**characterised in that** the stanchion head receiver (14) is configured at least substantially as a C-profile, and **in that** the stanchion head (12) preferably engages at least partially into the recess (22) of the C-profile in the swivelled position.

6. Stanchion according to Claim 5,
**characterised in that** the at least one entry chamfer (24) is provided on a guide device (26) in such a way that the at least one entry chamfer (24) cooperates with the C-profile adjacently to the recess (21) during the insertion of the stanchion head (12) swivelled to the side from the retracted position into the inserted position.

7. Stanchion according to any one of Claims 1 to 6,
**characterised in that** the stanchion head (12) is connected for the height adjustment of the stanchion head (12) to a setting rod (18) which is preferably at least partially received in the stanchion head receiver (14), is adjustable in height and is driven by an adjustment device (17), and preferably **in that** the setting rod (18) is adjustable in height mechanically, hydraulically and/or pneumatically relative to the stanchion head receiver (14).

8. Stanchion according to any one of Claims 1 to 7,
**characterised in that** the stanchion head (12) is braced relative to the stanchion head receiver (14) in at least one inserted position, and, preferably, **in that** the stanchion head (12) bears on the stanchion head receiver (14) in at least one inserted position.

9. Stanchion according to any one of Claims 1 to 8,
**characterised in that** the stanchion head (12) comprises an at least partially U-shaped longitudinal transom receiver (13) for receiving a roof (3), in particular a longitudinal transom (11), of a tarpaulin body (1).

10. Stanchion according to any one of Claims 1 to 9,
**characterised in that** stanchion head receiver (14) is held adjustably in height relative to a stanchion body (15) on, preferably in, the stanchion body (15).

11. Stanchion according to Claim 10,
**characterised in that** the stanchion head receiver (14) can be fixed in different height positions with respect to the stanchion body (15) relative, to preferably on, the stanchion body (15), and, preferably, **in that** the setting rod and/or the stanchion head (12) is adjustable in height relative to the stanchion body (15).

12. Stanchion according to Claim 10 or 11,
**characterised in that** the stanchion head (12) is adjustable from the inserted position into the retracted position and back in at least one height position, preferably a plurality of height positions, in particular all height positions, of the stanchion head receiver (14) with respect to the stanchion body (15).

13. Stanchion according to any one of Claims 10 to 12,
**characterised in that** the stanchion head (12) in the inserted position is supported by the stanchion head receiver (14), in particular bears on the stanchion head receiver (14), in at least one height position, preferably a plurality of height positions, in particular all height positions, of the stanchion head receiver (14) with respect to the stanchion body (15).

14. Tarpaulin body (1) of a commercial vehicle (N), in particular a truck, trailer or semitrailer, having at least one stanchion (9), in particular a corner stanchion, at least partially supporting the roof (3),
**characterised in that** the at least one stanchion (9) is configured according to any one of Claims 1 to 13, and **in that** the roof (3) is adjustable by means of the at least one stanchion (9) from at least one driving position arranged parallel to the loading floor (10) into at least one loading position inclined obliquely with respect to the loading floor (10), and back.

15. Tarpaulin body according to Claim 14,
**characterised in that** four corner stanchions (9) according to any one of Claims 1 to 13, which are assigned to the four corners of the loading floor (10) and extend upwards substantially perpendicularly to the loading floor (10), are provided.

## Revendications

1. Rancher (9), notamment un rancher d'angle, pour une structure à bâche (1) d'un véhicule utilitaire (N), notamment un camion, une remorque ou une semi-remorque, avec un toit (3) réglable en hauteur au moins d'un côté, comportant une tête de rancher (12) pour porter, au moins partiellement, un toit (3) et un logement de tête de rancher (14) pour loger, au moins partiellement, la tête de rancher (12) dans une position rétractée dans le logement de tête de rancher (14) et dans une position déployée hors du logement de tête de rancher (14), la tête de rancher (12) et le logement de tête de rancher (14) étant reliés par une articulation pivotante (20) pour le pivotement de la tête de rancher (12) par rapport au logement de tête de rancher (14),
**caractérisé en ce que**
la tête de rancher (12), dans la position déployée, est déployée hors du logement de tête de rancher (14) de manière à libérer le pivotement partiel de la tête de rancher (12) autour de l'articulation pivotante (20) d'une position de départ en une position pivotée, et **en ce que** la tête de rancher (12), dans la position rétractée, est logée dans le logement de tête de rancher (14) de sorte à bloquer, au moins sensiblement, le pivotement de la tête de rancher (12) hors de la position de départ autour de l'articulation pivotante (20).

2. Rancher selon la revendication 1,
**caractérisé en ce que**
l'on prévoit l'articulation pivotante (20) réglable en hauteur par rapport au logement de tête de rancher (14) et/ou stationnaire par rapport à la tête de rancher (12).

3. Rancher selon la revendication 1 ou 2,
**caractérisé en ce que**
la tête de rancher (12) s'engage dans au moins un trou oblong (19) du logement de tête de rancher (14) et est réglable en hauteur le long d'au moins un trou oblong (19) par rapport au logement de tête de rancher (14) et/ou **en ce que** le logement de tête de rancher (14) s'engage dans au moins un trou oblong (19) de la tête de rancher (12) et est réglable en hauteur le long d'au moins un trou oblong (19) par rapport à la tête de rancher (12).

4. Rancher selon l'une des revendications 1 à 3,
**caractérisé en ce que**
la tête de rancher (12) et/ou le logement de tête de rancher (14) présente au moins une inclinaison d'entrée (24) de manière à faire glisser juxtaposés la tête de rancher (12) et le logement de tête de rancher (14), lors du déplacement de la position déployée en la position rétractée, à l'aide d'au moins une inclinaison d'entrée (24) et à faire ainsi pivoter en retour, par contrainte, la tête de rancher (12) d'une position pivotée en une position de départ.

5. Rancher selon l'une des revendications 1 à 4,
**caractérisé en ce que**
le logement de tête de rancher (14) est conçu, au moins sensiblement, en tant que profilé en C et **en ce que**, de préférence, la tête de rancher (12) s'engage, dans la position pivotée, au moins partiellement, dans l'évidement (22) du profilé en C.

6. Rancher selon la revendication 5,
**caractérisé en ce que**
l'on prévoit au moins une inclinaison d'entrée (24) sur un dispositif de guidage (26) de telle manière qu'au moins une inclinaison d'entrée (24) coopère avec le profilé en C adjacent à l'évidement (21), lors de l'insertion de la tête de rancher (12), pivotée sur le côté, de la position déployée en la position rétractée.

7. Rancher selon l'une des revendications 1 à 6,
**caractérisé en ce que**
la tête de rancher (12), pour le réglage en hauteur de la tête de rancher (12), est reliée à un levier de réglage (18) réglable en hauteur, de préférence au moins partiellement logé dans le logement de tête de rancher (14), et entraîné par un dispositif de réglage (17), et **en ce que**, de préférence, le levier de réglage (18) est réglable en hauteur mécaniquement, hydrauliquement, et/ou pneumatiquement par rapport au logement de tête de rancher (14).

8. Rancher selon l'une des revendications 1 à 7,
**caractérisé en ce que**
la tête de rancher (12) prend appui, dans au moins une position rétractée, par rapport au logement de tête de rancher (14) et **en ce que**, de préférence, la tête de rancher (12) repose, dans au moins une position rétractée, sur le logement de tête de rancher (14).

9. Rancher selon l'une des revendications 1 à 8,
**caractérisé en ce que**
la tête de rancher (12) présente au moins un logement de longeron longitudinal (13), au moins partiellement en forme de U, pour le logement d'un toit (3), notamment d'un longeron longitudinal (11) d'une structure à bâche (1).

10. Rancher selon l'une des revendications 1 à 9,
**caractérisé en ce que**
le logement de tête de rancher (14) est maintenu réglable en hauteur par rapport à un corps de rancher (15), et est, de préférence, maintenu dans le corps de rancher (15).

11. Rancher selon la revendication 10,
**caractérisé en ce que**
le logement de tête de rancher (14) peut être fixé dans différentes positions en hauteur par rapport au corps de rancher (15), ou peut, de préférence, être fixé sur le corps de rancher (15) et **en ce que**, de préférence, le levier de réglage et/ou la tête de rancher (12) peut être réglé(e) en hauteur par rapport au corps de rancher (15).

12. Rancher selon la revendication 10 ou 11,
**caractérisé en ce que**
la tête de rancher (12), dans au moins une position en hauteur, de préférence dans plusieurs positions en hauteur, notamment dans toutes les positions en hauteur, du logement de tête de rancher (14) par rapport au corps de rancher (15), peut être déplacée d'une position rétractée en une position déployée et inversement.

13. Rancher selon l'une des revendications 10 à 12,
**caractérisé en ce que**
la tête de rancher (12), dans au moins une position en hauteur, de préférence plusieurs positions en hauteur, notamment dans toutes les positions en hauteur du logement de tête de rancher (14), est soutenue, dans la position rétractée, par le logement de tête de rancher (14) par rapport au corps de rancher (15), de préférence, elle repose sur le logement de tête de rancher (14).

14. Structure à bâche (1) d'un véhicule utilitaire (N), notamment un camion, une remorque ou une semi-remorque, avec au moins un rancher (9), notamment un rancher d'angle, soutenant, au moins partiellement, le toit (3)
**caractérisée en ce que**
au moins un rancher (9) est conçu conformément à l'une des revendications 1 à 13 et **en ce que** le toit (3) peut être réglé, à l'aide d'au moins un rancher (9), au moins d'une position de marche agencée parallèlement par rapport au plancher de chargement (10) en au moins une position de chargement inclinée par rapport au plancher de chargement (10) et inversement.

15. Structure à bâche selon la revendication 14,
**caractérisée en ce que**
l'on prévoit des ranchers d'angle (9) associés aux quatre coins d'un plancher de chargement (10) et s'étendant vers le haut, au moins sensiblement perpendiculairement par rapport au plancher de chargement (10), conformément à l'une des revendications 1 à 13.
